Europäisches Patentamt

European Patent Office (11) Numéro de publication: **0 169 100 B1**

Office européen des brevets

(19)

(12) # FASCICULE DE BREVET EUROPÉEN

(45) Date de publication du fascicule du brevet: 21.06.89

(51) Int. Cl.⁴: **H 05 B 7/06,** H 05 B 3/03

(21) Numéro de dépôt: **85401131.9**

(22) Date de dépôt: **10.06.85**

(54) Electrode de paroi d'un récipient métallurgique au contact d'un métal en fusion.

(30) Priorité: **27.06.84 FR 8410482**

(43) Date de publication de la demande: **22.01.86 Bulletin 86/4**

(45) Mention de la délivrance du brevet: **21.06.89 Bulletin 89/25**

(84) Etats contractants désignés: **AT BE CH DE GB IT LI LU SE**

(56) Documents cité:
**EP-A-0 058 817**
**DE-A-2 718 293**
**DE-B-1 219 181**
**DE-C-282 162**
**US-A-3 129 473**

(73) Titulaire: **INSTITUT DE RECHERCHES DE LA SIDERURGIE FRANCAISE (IRSID), 185, rue du Président Roosevelt, F-78105 Saint Germain- en- Laye Cédex (FR)**

(72) Inventeur: **Michelet, Jacques, 19, rue du Fort, F-57050 - Longeville- les- Metz (FR)**
Inventeur: **Maurer, Ghislain, 2, rue des Anémones, F-57070 - Metz (FR)**

(74) Mandataire: **Ventavoli, Roger, INSTITUT DE RECHERCHES DE LA SIDERURGIE FRANCAISE (IRSID) Station d'Essais Boîte Postale 13, F-57210 Maizieres- lès- Metz (FR)**

LIBER, STOCKHOLM 1989

EP 0 169 100 B1

## Description

La présente invention concerne une électrode de paroi destinée à être mise en contact avec une masse métallique en fusion, par exemple un bain d'acier.

Les électrodes du genre considéré sont noyées dans le revêtement réfractaire d'un récipient métallurgique, généralement dans le fond, en vue de procéder au traitement du métal qui y est contenu, par apport d'énergie électrique.

Elles sont à cet effet reliées à une extrémité à une borne d'une alimentation électrique sous tension et placées en contact par l'autre extrémité avec le bain métallique, assurant de ce fait le passage du courant électrique dans le bain.

Parmi les récipients métallurgiques susceptibles d'être équipés de telles électrodes, on peut citer, de façon non restrictive, les cuves à électrolyse dans la métallurgie des métaux non ferreux, tels que l'aluminium, ou en sidérurgie, les poches de traitement, de maintien en température, ou les fours de fusion électrique, notamment les fours à arcs à courant continu pour lesquels des intensités électriques de l'ordre de 30 000 ampères et au-delà, doivent pouvoir être acceptées sans dommage pour l'électrode.

L'un des problèmes essentiels qui se pose alors est celui de la tenue dans le temps de l'électrode dont la partie terminale en contact direct avec la masse métallique en fusion, est soumise, en plus de l'effet joule évoqué ci-avant, à des contraintes thermiques très sévères dues à des températures très élevées, lesquelles, notamment dans le cas de la fusion de l'acier, peuvent atteindre 1 800° C, et même plus.

Diverses solutions visant à assurer un bon refroidissement de l'électrode sont actuellement connues.

Une première "famille" propose d'amener le fluide refroidissant au voisinage immédiat de l'extrémité chaude de l'électrode. Mais une fusion même réduite de l'électrode risque dans ce cas de détruire le système de refroidissement et par suite d'entraîner un contact dangereux du fluide avec le métal liquide.

Une autre "famille" de solutions, à laquelle appartient l'invention, propose un système de refroidissement externe de l'électrode, placé à l'extérieur du récipient métallurgique - Brevets français n° 1 538 996 et n° 2 292 367 -. Tout en étant plus "sécurisantes", ces dernières solutions ne sont pas actuellement satisfaisantes. En effet, l'éloignement entre l'extrémité chaude de l'électrode et son extrémité refroidie qui dépasse à l'extérieur du fond du récipient peut être à l'origine de la disparition ultérieure, par fusion, d'une partie trop importante de l'électrode, compromettant dangereusement en cet endroit l'étanchéité du récipient à l'égard de la masse en fusion qu'il contient.

La présente invention a pour but de permettre le passage du courant électrique à haute intensité en remédiant aux inconvénients des solutions connues citées ci-dessus.

Plus précisément, l'invention préconise un dispositif capable de s'opposer efficacement aux dangers de percée due à une fusion excessive de l'électrode.

A cet effet, l'invention à pour objet une électrode de paroi pour récipient métallurgique, refroidie par un fluide en circulation et comprenant:

- un corps métallique (5) de forme allongée, traversant la dite paroi (2) du récpient de manière que l'une de ses extrémités soit mise au contact du métal en fusion (7) et que l'autre extrémité constitue une partie terminale proéminente (8) à l'extérieur du récipient;

électrode caractérisée en ce qu'elle comprend en outre:

- un manchon (9), en matériau bon conducteur de la chaleur et de l'électricité, monté autour et au contact de la partie terminale proéminente (8) du corps (5) ledit manchon étant connecté à une borne d'une alimentation électrique;

- et des moyens de refroidissement du manchon (9) par circulation d'un fluide de refroidissement.

Conformément à un mode de réalisation, le corps implanté au travers de la paroi du récipient est une barre métallique, par exemple une billette d'acier. Par commodité, on considèrera dans la suite de l'exposé que le corps utilisé est une barre en acier.

Selon un mode de réalisation préférée, le manchon se prolonge au-delà de l'extrémité de la partie terminale de la barre et l'espace ainsi ménagé à l'intérieur du manchon sert de logement à un tampon en matière réfractaire appliqué contre l'extrémité de la barre.

Comme on l'aura sans doute compris, le principe de base de l'invention, qui est double, est mis en application grâce au manchon qui assure, d'une part, un refroidissement latéral indirect de la partie terminale proéminente de la barre, et, d'autre part, une connexion électrique latérale de cette même partie.

Le refroidissement latéral indirect s'opère par interposition, entre la parie terminale proéminente de la barre et le fluide refroidissant, d'un manchon en contact avec la barre.

De cette façon, le manchon joue un rôle de séparateur "barre-fluide" de refroidissement qui assure de ce fait une sécurité d'usage. De plus, le manchon joue un rôle de diffuseur thermique très efficace, puisqu'étant monté autour de l'extrémité de la barre, il contribue à augmenter la surface d'échange thermique avec le fluide refroidissant sans nuire à la qualité de cet échange.

Par ailleurs, comme il à été dit précédemment, la connexion électrique de la barre s'opère latéralement par l'intermediaire du manchon, ce qui procure favorablement une grande surface de contact électrique avec la barre sur toute la longueur de sa partie terminale.

Pour assurer cette double fonction électrique et thermique, le manchon est choisi en une matière bonne conductrice à la fois de la chaleur et de l'électricité, par exemple en cuivre ou en alliage de cuivre.

Cette conjugaison des fonctions thermique et électrique du manchon est avantageuse à plus d'un titre.

Tout d'abord, la structure d'ensemble de l'électrode de paroi selon l'invention est simple et nécessite peu de pièces.

En outre, la réalisation ainsi que le montage de ces pièces ne présentent aucune difficulté.

De plus, en raison du refroidissement latéral procuré par le manchon, la fusion de la partie non refroidie de la barre se prolonge à coeur dans la portion refroidie, ce qui conduit à la formation d'un interface liquide-solide stabilisé (ou front de fusion), de forme conique, à l'instar du puits de solidification bien connu dans le domaine de la coulée continue des métaux.

De la sorte, les éléments lourds, tels que le plomb, qui sont inévitablement présents dans les charges à fondre, viennent s'accumuler par gravité au fond du puits et ainsi ne détériorent nullement les conditions de passage du courant électrique qui s'opère latéralement.

Enfin, dans le cas où le cône de fusion viendrait à s'étendre jusqu'à l'extrémité de la barre, une variante de réalisation citée ci-dessus prévoit l'utilisation d'un tampon réfractaire, que l'on dispose au contact de cette extrémité comme sécurité à l'égard des risques de percées axiales.

En ce qui concerne les moyens de refroidissement de l'électrode, différentes variantes de réalisation conformes à l'invention sont envisageables.

Conformément à un mode de réalisation, le manchon est entouré à faible distance par une chemise de manière à ménager entre eux un espace annulaire pour la circulation du fluide réfrigérant. En outre, la chemise comprend des moyens d'entrée et de sortie servant à alimenter cet espace annulaire en fluide réfrigérant. On rappelle que cette technique de refroidissement est typiquement celle que l'on retrouve habituellement dans les lingotières de coulée continue des billettes ou des petits blooms.

Conformément à un autre mode de réalisation, la circulation du fluide réfrigérant est réalisée dans au moins une cannelure hélicoïdale ménagée sur la surface latérale exterieure du manchon. Une chemise, disposée autour du manchon assure la fermeture étanche de la cannelure. En outre, la chemise est équipée de moyens d'entrée et de sortie du fluide réfrigérant qui sont, d'une part reliés à une alimentation en fluide réfrigérant, et qui d'autre part communiquent avec les extrémités de la cannelure.

D'autres avantages et caractéristiques apparaîtront au vu de la description qui va suivre, donnée à titre d'exemple, en référence aux dessins annexés sur lesquels:

- la figure 1 représente une coupe schématique verticale d'un fond de four à arc à courant continu équipé d'une électrode selon l'invention,

- la figure 2 représente une coupe horizontale, selon le plan AA de la figure 1.

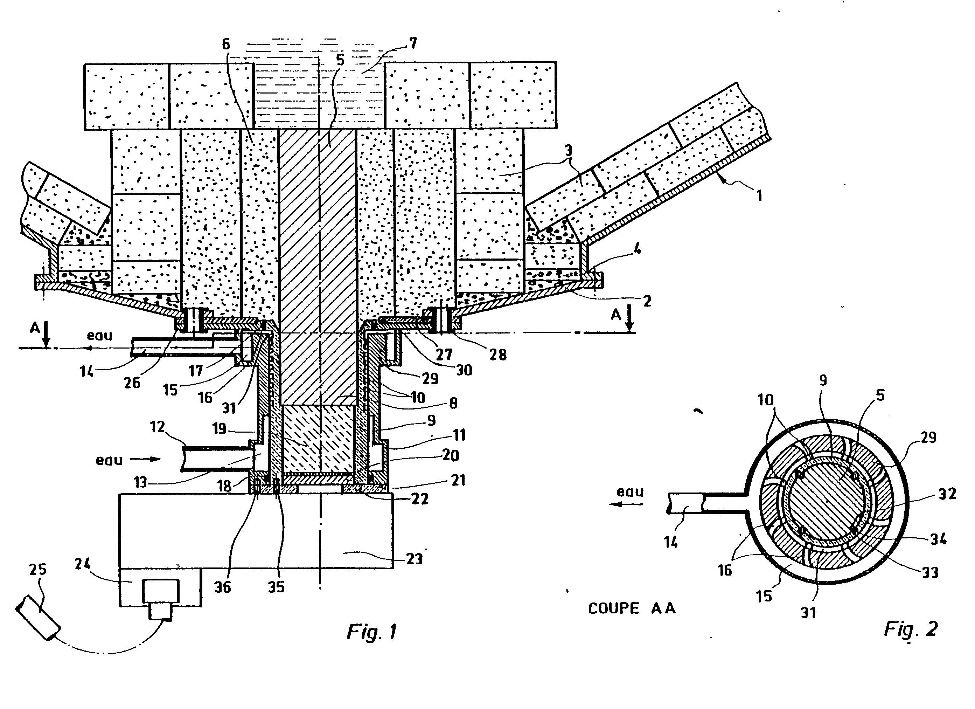

Sur la figure 1 on voit le fond 1 du four électrique à arc à courant continu qui est principalement formé d'une carapace métallique 2 revêtue intérieurement de briques 3 en matériau réfractaire, les interstices laissées entre les briques étant comblées avec un coulis magnésien 4. En outre, un passage laissé libre est prévu au centre du fond 1 du four afin d'y implanter une billette 5 en acier qui constitue dans cet exemple l'électrode de sole. L'espace laissé entre la partie supérieure de la billette 5 et les briques 3 est complété classiquement avec de la magnésie damée 6.

L'extrémité supérieure de la billette 5 est donc en contact avec le métal en fusion 7 qui est ici de l'acier. De préférence, une cuvette est ménagée au centre du fond 1 du four, afin de favoriser la formation d'un pied de bain juste au-dessus de l'extrémité supérieure de la billette 5.

A l'opposé, la billette 5 traverse la carapace 2 du four de manière à ce que sa partie terminale 8 dépasse à l'extérieur du four.

Un manchon 9 est monté sur la partie 8 de la billette. Conformément au mode de réalisation exemplifié sur la figure 1, l'assemblage du manchon 9 autour de la partie 8 terminale de la billette, est du type "tenon-mortaise" longitudinal qui présente l'avantage de permettre un jeu de dilatation différentiel entre la billette 5 et le manchon 9. Comme on peut le voir sur la figure 2, il s'agit d'un assemblage du type "tenon mortaise" avec clavette rapportée, constitué par deux rainures longitudinales 32 et 33, ménagées respectivement sur la surface latérale extérieure de la billette 5 et sur la surface latérale interne du manchon 9, et par une clavette 34 enfoncée à force dans l'espace ménagé par les deux rainures 32 et 33. Par ailleurs, le manchon 9 est choisi en cuivre pour ses bonnes qualités de conducteur électrique et thermique. De plus, le manchon 9 comporte sur sa surface latérale extérieure huit cannelures 10, hélicoïdales disposées côte à côte, chacune effectuant globalement un tour du manchon.

Une chemise 11, qui est choisie en métal dans cet exemple, est disposée de façon étanche autour du manchon 9 afin d'assurer la fermeture des cannelures 10. Des moyens d'entrée et de sortie du fluide réfrigérant, (lequel peut être avantageusement de l'eau déminéralisée), sont prévus sur la chemise métallique 11 afin d'alimenter les cannelures 10. Dans l'exemple présenté sur la figure 1, ces moyens sont constitués, à la partie inférieure de la chemise 11 par une conduite d'entrée 12 de l'eau accédant à une chambre annulaire 13, et à la partie supérieure de la chemise 11 par une conduite de sortie 14 de l'eau issue d'une chambre annulaire 15. Les cannelures 10 débouchent par leurs extrémités dans l'une et l'autre de ces chambres et définissent ainsi des circuits de refroidissement en "parallèle".

Ainsi, leur extrémité inférieure débouche directement dans la chambre 13 et leur extrémité supérieure communique avec la chambre de sortie 15 par, l'intermédiaire, tout d'abord d'une gorge annulaire 31 et ensuite par l'intermédiaire des passages horizontaux 16 arqués dans le sens du mouvement rotatif de l'eau dans les cannelures 10.

La gorge annulaire 31 est ménagée dans la partie superieure du manchon 9. L'extrémité de sortie des cannelures 10 débouche dans le fond de cette gorge, laquelle, par ailleurs, communique avec la chambre de sortie annulaire concentrique 15 par l'intermédiaire des passages horizontaux 16 ménagés sur la surface frontale d'une surépaisseur 29 de la chemise 11 à sa partie supérieure. La fermeture des passages 16 est obtenue par la venue de la chemise contre une plaque de fond 26 (décrite par la suite) et un cordon de soudure 30 assure la solidarisation de ces deux pièces. En outre, comme on peut le voir sur la figure 2, la billette en acier 5, ou du moins sa partie terminale 8, ainsi que le manchon 9 et la chemise 11 sont de section circulaire.

L'étanchéité hydraulique est assurée par des joints toriques 17 et 18 disposés respectivement aux extrémités supérieure et inférieure du manchon 9 pour tenir compte des phénomènes de dilatation différentielle déjà évoquée.

Dans un souci de sécurité, des moyens ont également été prévus pour s'opposer aux fuites accidentelles d'acier liquide, en particulier dans le cas où la circulation d'eau dans les cannelures est anormalement faible.

Ces moyens sont constitués par un tampon 19 en matériau réfractaire disposé contre l'extrémité inférieure de la billette 5 dans un logement ménagé par la partie basse du manchon 9 qui, à cet effet, est prolongé au-dela de la partie terminale 8 de la billette 5 sur une distance de 10 à 20 cm environ. On achève le montage en disposant successivement contre la face inférieure du tampon, une pastille 20 en amiante qui assure l'isolation thermique et ensuite contre cette pastille, une plaque de fermeture 21 en acier. On observera, sans que cela soit une caractéristique nécessaire de l'invention, que le tampon 19 se situe en dessous de la zone de refroidissement généré par la circulation d'eau dans les cannelures 10.

En ce qui concerne l'alimentation électrique de l'électrode représentée sur la figure 1, elle comprend une couronne 22 en cuivre, fixée au moyen des vis 35 et 36, respectivement contre l'extrémité inférieure du manchon 9 et contre l'extrémité inférieure de la chemise 11. La couronne 22 est baguée par une douille en cuivre 23 présentant une ou plusieurs ailettes verticales également en cuivre, qu'on dénomme généralement "drapeau". A chaque drapeau 23, est fixée une plaque 24, également en cuivre, laquelle est directement reliée par un câble 25 en cuivre à une borne de l'alimentation électrique (non représentée sur les figures). En raison des intensités électriques élevées véhiculées par les câbles 25, ces derniers sont de préférence creux pour y permettre une circulation d'un fluide réfrigérant, par exemple de l'eau.

L'électrode selon l'invention comprend en outre des moyens d'assemblage de l'ensemble formé par le manchon 9 et la chemise 11, sous la carapace 2 du four et autour de la billette 5. Dans l'exemple décrit, ces moyens sont constitués tout d'abord par une plaque de fond 26, solidaire, comme déjà vu, de la partie supérieure de la chemise 11, grâce au cordon de soudure 30 et qui, de ce fait, fait fonction de bride d'assemblage de la chemise à la plaque de fond 26 avec interposition d'une rondelle 27 isolante de l'électricité. Des passages sont bien entendu prévus dans la plaque de fond 26 et dans la rondelle 27 pour l'introduction de boulons d'assemblage. Afin de conserver l'isolation électrique du four, on introduit dans chaque passage aménagé pour un boulon, un canon 28 isolant électrique.

Bien entendu, l'invention n'est nullement limitée au mode de réalisation décrit ci-dessus.

Il en est ainsi par exemple de la forme des cannelures 10 ménagées sur la surface latérale externe du manchon 9.

Conformément à une première variante, on prévoit des cannelures longitudinales réparties sur toute la périphérie du manchon 9.

Conformément à une autre variante, les cannelures longitudinales peuvent être remplacées par des canaux ménagés, par exemple par perçage, à l'intérieur du manchon. Bien entendu, dans ce cas, la présence de la chemise n'est pas nécessaire.

Conformément à une autre variante, on peut prévoir une cannelure unique hélicoïdale sur le manchon 9.

De plus, le montage du manchon 9 autour de la partie terminale 8 de la billette peut également être assuré par d'autres moyens que les "tenons-mortaise", par exemple par brasage ou par vissage. On préférera toutefois des moyens d'assemblage qui permettent un déplacement relatif longitudinal des pièces afin de ne pas contrarier les phénomènes de dilatation différentielle.

Par ailleurs, il n'est pas impératif que le contact entre le manchon 9 et la billette 5 soit assuré sur toute la périphérie de la billette lors du montage. En effet, il sera assuré automatiquement par la dilatation thermique de la billette chaude dans le manchon froid.

En ce qui concerne la connexion électrique du manchon, il existe différentes possibilités de celle décrite précédemment, notamment une bague en cuivre, serrée autour du manchon, et qui serait reliée à l'alimentation électrique.

Enfin, si l'invention trouve une application préférentielle en tant qu'électrode de sole pour un four à arc à courant continu, elle est également destinée à d'autres utilisations, dès lors qu'il est recherché une mise en contact entre une masse en fusion et une électrode, ou de façon plus générale, entre une masse en fusion et une barre métallique devant assurer le passage du courant électrique.

Il demeure que l'application aux fours à arc de fusion d'acier, ou à d'autres fours similaires, présente des avantages métallurgiques appréciables. En particulier, on obtient en fin de fusion, après arrêt du passage du courant électrique, un brassage pneumatique naturel du bain très favorable, comme on le sait, aux échanges métal-laitier, à l'homogénéisation thermique du bain, etc...

Ce phénomène de brassage, provoqué par un dégagement de CO en provenance de la billette qui libère de l'oxygène dissous en se resolidifiant sous l'effet refroidissant du manchon dès que l'on coupe l'alimentation électrique, se manifeste par une intumescence vigoureuse, observable à la surface du bain à l'aplomb de la billette.

On retrouve là, un aspect particulièrement attractif de l'invention, dans laquelle la billette joue le rôle d'une masse d'acier effervescent qui fond puis se resolidifie alternativement au rythme des cycles opératoires du four.

**Revendications**

1. Electrode de paroi pour récipient métallurgique, refroidie par un fluide en circulation et comprenant:
- un corps métallique (5) de forme allongée, traversant la-dite paroi (2) du récipent de manière que l'une de ses extrémités soit mise au contact du métal en fusion (7) et que l'autre extrémité constitue une partie terminale proéminente (8) à 1 extérieur du récipient;
électrode caractérisée en ce qu'elle comprend en outre:
- un manchon (9), en matériau bon conducteur de la chaleur et de l'électricité, monté autour et au contact de la partie terminale proéminente (8) du corps (5) ledit manchon étant connecté à une borne d'une alimentation électrique;
- et des moyens de refroidissement du manchon (9) par circulation d'un fluide de refroidissement.

2. Electrode de paroi selon la revendication 1, caractérisé en ce que la partie terminale (8) du corps (5) et le manchon (9) sont de section circulaire et que le montage du manchon (9) autour et au contact de la partie terminale (8) dudit corps (5) est assuré par un assemblage du type "tenon-mortaise" longitudinaux.

3. Electrode de paroi selon la revendication 1 ou 2, caractérisé en ce que le manchon (9) est prolongé au-delà de l'extrémité de la partie terminale (8) du corps (5) et en ce que l'espace ainsi ménagé à l'intérieur du manchon sert de logement à un tampon en matière réfractaire appliqué contre l'extrémité du corps (5).

4. Electrode de paroi selon l'une quelconque des revendications 1 à 3, caractérisé en ce que les moyens de refroidissement du manchon sont constitués principalement par une chemise (11) entourant à distance le manchon de façon à ménager entre eux un espace annulaire pour le passage du fluide réfrigérant, ladite chemise étant pourvue de moyens d'entrée (12, 13) et de sortie (14, 15), connectés à une alimentation en fluide réfrigérant, et servant à alimenter ledit espace.

5. Electrode de paroi selon l'une quelconque des revendications 1 à 4, caractérisé en ce que les moyens de refroidissement du manchon sont constitués par:
- au moins une cannelure (10) ménagée sur la surface latérale externe du manchon (9), dans laquelle circule le fluide réfrigérant,
- et une chemise (11) de fermeture de ladite cannelure, disposée autour du manchon, ladite chemise étant équipée de moyens d'entrée (12, 13) et de sortie (14, 15) qui sont reliés aux extrémités de la cannelure (10), et également connectés à une alimentation en fluide réfrigérant.

6. Electrode de paroi selon la revendication 5, caractérisé en ce que la surface latérale externe du manchon présente des cannelures (10) longitudinales, réparties selon toute la périphérie de ladite surface.

7. Electrode de paroi selon la revendication 5, caractérisé en ce que la surface latérale externe du manchon est pourvue d'une cannelure (10) hélicoïdale.

8. Electrode de paroi selon la revendication 5, caractérisé en ce que la surface latérale externe du manchon est pourvue de plusieurs cannelures (10) hélicoïdales et délimitant des circuits de refroidissement en parallèle.

9. Electrode de paroi selon l'une quelconque des revendications 4 à 8, caractérisé en ce que les moyens d'entrée et de sortie du fluide de refroidissement dont est munie la chemise (11), sont respectivement disposés dans la partie inférieure et la partie supérieure de la chemise; en ce que les moyens de sortie, à la partie supérieure de la chemise, comprennent une gorge circulaire (31) entourant le manchon, dont la périphérie interne communique avec l'extrémité de sortie de la ou des cannelures (10) et dont la périphérie externe est reliée à une chambre de sortie annulaire concentrique (15) par l'intermédiaire d'une pluralité de passages horizontaux (16) ménagés sur la surface frontale d'une surépaisseur (29) de la chemise (11) à sa partie supérieure.

10. Electrode de paroi selon l'une quelconque des revendications 4 à 9, caractérisé en ce que la chemise (11) se termine à son extrémité supérieure par une collerette annulaire (26) pourvue de moyens (27,28) pour la fixation de la chemise sur la paroi du fond du récipient métallurgique, lesdits moyens étant également prévus pour assurer l'isolation électrique entre la carapace métallique (2) du récipient métallurgique et le manchon (9).

11. Application de l'électrode de paroi selon l'une quelconque des revendications précédentes à un four électrique de fusion de l'acier.

12. Application selon la revendication 11, caractérisée en ce que le four électrique est un four à arc à courant continu.

## Patentansprüche

1. Wandelektrode für ein metallurgisches Gefäß, die mittels eines zirkulierenden Fluids gekühlt ist und umfaßt:

einen Metallkörper (5) von langgestreckter Form, der die genannte Wand (2) des Gefäßes auf solche Weise durchsetzt, daß eines seiner Enden mit dem geschmolzenen Metall (7) in Berührung gebracht ist und sein anderes Ende einen Endabschnitt (9) bildet, der über die Außenseite des Gefäßes hinausragt;

wobei die Elektrode dadurch gekennzeichnet ist, daß sie weiters umfaßt:

- eine Hülse (9) aus einem gut wärme- und stromleitenden Material, die um den hervorragenden Endabschnitt (8) des Körpers (5) herum und in Berührung mit diesem montiert ist, wobei die genannte Hülse mit einem Anschluß bzw. einer Anschlußklemme für die Zufuhr von elektrischem Strom verbunden ist;

- und eine Kühleinrichtung für die Hülse (9) mit Zirkulation eines Kühlfluids.

2. Wandelektrode nach Anspruch 1, dadurch gekennzeichnet, daß der Endabschnitt (8) des Körpers (5) und die Hülse (9) einen kreisförmigen Querschnitt aufweisen und daß die Montage der Hülse (9) um den Endabschnitt (8) des Körpers (5) herum und in Berührung mit diesem durch einen in Längsrichtung verlaufenden Zusammenbau des Typs "Nut-Zapfen" gewährleistet ist.

3. Wandelektrode nach Anspruch 1 oder 2, dadurch gekennzeichnet, daß die Hülse (9) über das Ende des Endabschnittes (8) des Körpers (5) hinaus verlängert ist und daß der so im Inneren der Hülse ausgebildete Raum für die Unterbringung eines Stopfens aus feuerfestem Material dient, der gegen das Ende des Körpers (5) anliegt.

4. Wandelektrode nach einem der Ansprüche 1 bis 3, dadurch gekennzeichnet, daß die Kühleinrichtung der Hülse hauptsächlich von einem Mantel (11) gebildet wird, der im Abstand die Hülse so umgibt, daß zwischen ihnen ein ringförmiger Raum für das Durchtreten des Kühlfluids ausgebildet wird, und daß der genannte Mantel (11) mit Einlaßeinrichtungen (12, 13) und Auslaßeinrichtungen (14,15) versehen ist, die mit einer Zufuhr für Kühlfluid verbunden sind und dazu dienen, den genannten Raum zu versorgen.

5. Wandelektrode nach einem der Ansprüche 1 bis 4, dadurch gekennzeichnet, daß die Kühlenrichtungen der Hülse bestehen aus:

- wenigstens einer Rille (10), die auf der seitlichen Außenfläche der Hülse (9) ausgebildet ist, in der das Kühlfluid zirkuliert,

- und einem Mantel (11) zum Verschließen der genannten Rille, der um die Hülse herum angeordnet ist, wobei der genannte Mantel mit Einlaßeinrichtungen (12, 13) und Auslaßeinrichtungen (14, 15) versehen ist, die mit den Enden der Rille (10) und gleichfalls mit einer Zufuhr für Kühlfluid verbunden sind.

6. Wandelektrode nach Anspruch 5, dadurch gekennzeichnet, daß die seitliche Außenfläche der Hülse in Längsrichtung verlaufende Rillen (10) aufweist, die über den gesamten Umfang der genannten Fläche verteilt sind.

7. Wandelektrode nach Anspruch 5, dadurch gekennzeichnet, daß die seitliche Außenfläche der Hülse mit einer spiralförmigen Rille (19) vesehen ist.

8. Wandelektrode nach Anspruch 5, dadurch gekennzeichnet, daß die seitliche Außenfläche der Hülse mit mehreren spiralförmigen Rillen (10) versehen ist, die parallele Kühlkreisläufe begrenzen.

9. Wandelektrode nach 1 einem der Ansprüche 4 bis 8, dadurch gekennzeichnet, daß die Einlaß- und Auslaßeinrichtungen für das Kühlfluid, mit denen der Mantel (11) versehen ist, jeweils im unteren Abschnit und oberen Abschnitt des Mantels angeordnet sind; daß die im oberen Abschnitt des Mantels angeordneten Auslaßeinrichtungen eine kreisförmige Rinne (31) umfassen, die die Hülse umgibt und deren innerer Umfang mit dem Auslaßende der Rille(n) (10) in Verbindung steht und deren Außenumfang mit einer konzentrischen ringförmigen Auslaßkammer (15) unter Zwischenschaltung einer Vielzahl von horizontalen Durchlässen (16) verbunden ist, die auf der Stirnfläche einer Verdickung (29) des Mantels (11) in seinem oberen Abschnitt ausgebildet sind.

10. Wandelektrode nach einem der Ansprüche 4 bis 9, dadurch gekennzeichnet, daß der Mantel (11) an seinem oberen Ende in einen ringförmigen Bund (26) ausläuft, der mit Einrichtungen (27,28) für die Befestigung des Mantels an der Wand des Bodens des metallurgischen Gefäßes versehen ist, wobei die genannten Einrichtungen gleichermaßen dafür vorgesehen sind, die elektrische Isolierung zwischen der Metallmaske bzw. -verkleidung (2) des metallurgischen Gefäßes und der Hülse (9) zu gewährleisten.

11. Verwendung der Wandelektrode nach einem der vorhergehenden Ansprüche auf einen elektrischen Stahlschmelzofen.

12. Anwendung nach Anspruch 11, dadurch gekennzeichnet, daß der elektrische Ofen ein Gleichstrom-Lichtbogenofen ist.

## Claims

1. Wall electrode for a metallurgical vessel, cooled by a circulating fluid and comprising:
- a metal body (5) with an elongated shape, passing through the said wall (2) of the vessel in such a way that one of its ends makes contact with the molten metal (7) and the other end forms a projecting end part (8) outside the vessel; electrode characterized in that it comprises in addition:

- a sleeve (9) which is made of thermally and electrically conductive material and is mounted around and in contact with the projecting end part (8) of the body (5), the said sleeve being connected to a terminal of an electrical power supply;

- and means for cooling the sleeve (9) by circulation of a cooling fluid.

2. Wall electrode according to Claim 1, characterized in that the end part (8) of the body (5) and the sleeve (9) have a circular cross-section and in that mounting of the sleeve (9) around and in contact with the end part (8) of the said body (5) is ensured by an assembly of the longitudinal "tenon-and-mortise" type.

3. Wall electrode according to Claim 1 or Claim 2, characterized in that the sleeve (9) is extended beyond the end of the end part (8) of the body (5) and in that the space thus formed inside the sleeve serves as the seat for a refractory-material packing applied against the end of the body (5).

4. Wall electrode according to any one of Claims 1 to 3, characterized in that the sleeve cooling means consist mainly of a casing (11) surrounding the sleeve at a distance so as to form between them an annular space for the coolant to pass through, the said casing being provided with inlet means (12, 13) and outlet means (14, 15) connected to a coolant supply and serving to supply the said space.

5. Wall electrode according to any one of Claims 1 to 4, characterized in that the sleeve cooling means consist of:

- at least one channel (10) which is formed on the external lateral surface of the sleeve (9) and inside which the coolant circulates,

- and a casing (11) for closing the said channel, arranged around the sleeve, the said casing being equipped with inlet means (12, 13) and outlet means (14, 15) which are joined to the ends of the channel (10) and also connected to a coolant supply.

6. Wall electrode according to Claim 5, characterized in that the external lateral surface of the sleeve has longitudinal channels (10) located at intervals along the entire periphery of the said surface.

7. Wall electrode according to Claim 5, characterized in that the external lateral surface of the sleeve is provided with a helical channel (10).

8. Wall electrode according to Claim 5, characterized in that the external lateral surface of the sleeve is provided with several helical channels (10) defining parallel cooling circuits.

9. Wall electrode according to any one of Claims 4 to 8, characterized in that the cooling fluid inlet and outlet means with which the casing (11) is provided are arranged at the bottom and at the top of the casing, respectively; in that the outlet means, at the top of the casing, comprise a circular groove (31) surrounding the sleeve, the internal periphery of which communicates with the outlet end of the channel or channels (10) and the external periphery of which is connected to a concentric annular chamber (15) by means of a plurality of horizontal passages (16) formed on the front surface of a thicker portion (29) of the casing (11) at the top.

10. Wall electrode according to any one of Claims 4 to 9, characterized in that the casing (11) ends at the top in an annular collar (26) provided with means (27, 28) for fixing the casing onto the bottom wall of the metallurgical vessel, the said means also being intended to ensure electrical insulation between the metal shell (2) of the metallurgical vessel and the sleeve (9).

11. Application of the wall electrode according to any one of the preceding claims to an electric furnace for melting steel.

12. Application according to Claim 11, characterized in that the electric furnace is a direct-current arc furnace.

Fig. 1

COUPE A A

Fig. 2